# EUROPÄISCHE PATENTANMELDUNG

(11) **EP 0 986 958 A2**
(43) Veröffentlichungstag der Anmeldung: **22.03.2000**
(21) Anmeldenummer: 99117809.6
(22) Anmeldetag: 09.09.1999
(51) Int. Cl.: A23F 3/38, A23F 3/14

(54) **Entkoffeinierung von Tee**

(30) Priorität: 18.09.1998 DE 19842858
(71) Anmelder: Vollbrecht, H.-Rüdiger, Dr., 83352 Altenmarkt (DE); Vollbrecht, Christel, 83352 Altenmark (DE); Tressel, Roland, Professor Dr., 14109 Berlin-Wannsee (DE); Kersten, Evelyn, Dr., 14109 Berlin-Wannsee (DE)
(72) Erfinder: Vollbrecht, H.-Rüdiger, Dr., 83352 Altenmarkt (DE); Vollbrecht, Christel, 83352 Altenmark (DE); Tressel, Roland, Professor Dr., 14109 Berlin-Wannsee (DE); Kersten, Evelyn, Dr., 14109 Berlin-Wannsee (DE)
(74) Vertreter: Lederer, Franz, Dr.

(57) **Zusammenfassung**

Gegenstand der Erfindung ist ein Produkt zur unmittelbaren Herstellung eines trinkfertigen entkoffeinierten Teeaufgusses bestehend aus einer innigen Mischung von trockenen, gegebenenfalls zerkleinerten, fermentierten oder teil- oder unfermentierten Teeblättern mit einem festen, teilchenförmigen, wasserunlöslichen Adsorptionsmittel für Koffein, wobei sich die Mischung in einem flüssigkeitsdurchlässigen, heißwasserbeständigen Behältnis befindet, welches in der Lage ist, die festen Bestandteile der Mischung zurückzuhalten.

Die Erfindung betrifft ferner ein Verfahren zur Herstellung eines trinkfertigen entkoffeinierten Teeaufgusses, wobei eine feste Mischung aus trockenen, gegebenenfalls zerkleinerten, fermentierten oder teil- oder unfermentierten Teeblättern mit einem festen, teilchenförmigen, wasserunlöslichen Adsorptionsmittel für Koffein mit heißem Wasser aufgegossen und 2-6 Minuten ziehengelassen wird, wonach die feste Mischung von dem so hergestellten Teeaufguß abgetrennt wird.

## Beschreibung

Die vorliegende Erfindung betrifft ein Produkt und ein Verfahren zur unmittelbaren Herstellung eines trinkfertigen, entkoffeinierten Teeaufgusses.

Die Erfindung bezieht sich auf sogenannten grünen und schwarzen Tee sowie teilfermentierten Tee. Der schwarze Tee unterscheidet sich von dem grünen Tee im wesentlichen lediglich durch einen zusätzlichen Fermentationsvorgang, der ihm sein typisches Aroma bringt. Gleichzusetzen mit grünem oder schwarzem Tee sind Teeprodukte, denen Aromen zugesetzt werden, um bestimmte Geschmacksnoten zu erzeugen. Man bezeichnet solche Teeprodukte als aromatisierten Tee. Alle diese Teeprodukte enthalten Koffein. Kräutertees enthalten kein Koffein. Die Erfindung bezieht sich nicht auf solche koffeinfreien Tees.

Die anregende Wirkung von Koffein in Kaffee und Tee ist seit langem bekannt und für viele Verbraucher ein wesentlicher Grund für den Konsum. Andererseits gibt es eine Vielzahl von Menschen, die aus medizinischen oder sonstigen Gründen kein Koffein vertragen oder solches nicht zu sich nehmen wollen und für diese Verbrauchergruppe bemüht man sich seit langer Zeit Kaffee und Tee zu entkoffeinieren. Verschiedene Verfahren ermöglichen es, einen entkoffeinierten Kaffee herzustellen, der in seinen Aromaeigenschaften einem normalen Kaffee entspricht. Bei diesen Verfahren wird das Koffein meist bereits dem grünen Kaffee vor der Röstung entzogen, damit die bei der Röstung entstehenden feinen Aromaprodukte nicht verloren gehen.

Aus den gleichen Gründen wie bei Kaffee besteht ebenfalls ein Bedarf an entkoffeiniertem Tee. Speziell in den asiatischen Ländern ist man diesem Bedarf durch die Praxis nachgekommen, am Morgen normalen grünen Tee konventionell mit heißem Wasser aufzubrühen, ziehen zu lassen und dann zu trinken und dasselbe Teeblatt im Laufe des Tages immer wieder aufzugießen. Weil das Koffein leicht wasserlöslich ist, löst es sich aus dem Teeblatt bereits beim ersten Aufguß und gelangt nahezu vollständig in den ersten Sud. Nach wiederholtem Aufguß dagegen enthält der Tee kaum noch Koffein, so daß am Abend ein weitgehend entkoffeinierter Tee getrunken wird.

Mehr als dem Kaffee wird dem Tee eine besondere gesundheitsfördernde Wirkung zugeschrieben, was durch bestimmte Teeinhaltsstoffe begründet wird. Man weiß inzwischen, daß die im Tee enthaltenen Antioxidantien potente Wirkstoffe sind, die sich günstig auf die Gesundheit auswirken. Tee wird daher auch gern Kindern verabreicht, wobei lediglich sein Koffeingehalt oftmals kontraindiziert ist, weil gerade Kinder besonders empfindlich gegen die schlafbeeinträchtigende Wirkung des Koffeins sind.

Es besteht daher also auch ein großer Bedarf an entkoffeiniertem Tee, und wenn auch heute nicht nur von Kindern, sondern auch von Erwachsenen erhebliche Mengen von entkoffeiniertem Tee konsumiert werden, ist entkoffeinierter Tee nicht so populär geworden wie entkoffeinierter Kaffee, was auch daran liegt, daß seine Herstellung wesentlich schwieriger ist.

Der vorliegenden Erfindung liegt daher die Aufgabe zugrunde, entkoffeinierten Tee zur Verfügung zu stellen, der leicht herstellbar ist, in seinen Farb- und Aromaeigenschaften dem normalen Tee entspricht und der auch die für das Aroma vielleicht irrelevanten, aber für seine gesundheitsfördernden Wirkungen wesentlichen Inhaltsstoffe, wie beispielsweise Antioxidantien und Catechine, in möglichst unverminderter Menge enthält.

Üblicherweise wird die Entkoffeinierung von Kaffee und Tee durch Extraktion mit Lösemitteln durchgeführt. Wie beispielsweise der GB-PS 302 332 zu entnehmen ist, wird das Koffein aus der aufgebrochenen grünen Kaffeebohne mittels Benzol extrahiert. Nach dem Verfahren der GB-PS 302 332 wird eine wäßrige Infusion aus gerösteten Kaffeebohnen hergestellt, aus der Koffein und Röststoffe durch Absorption an einem Absorptionsmittel entfernt werden, indem man die Infusion durch einen Absorptionsfilter leitet.

Nach der US-PS 2 151 582 entkoffeiniert man Kaffee, indem man einen heißen Wasseraufguß des Kaffees herstellt und diesen mit Holzkohle in Anwesenheit kleinerer Mengen langsam löslicher alkalischer Substanzen behandelt.

Nach dem Verfahren der US-PS 3 108 876 stellt man entkoffeinierten Instantkaffee her, indem man einen konzentrierten Aufguß des Kaffees durch ein oder mehrere Kationenaustauscherbetten durchlaufen läßt, die Infusion darauf neutralisiert und schließlich sprühtrocknet.

Die DE-PS 26 00 492 offenbart ein Verfahren zur adsorptiven Entkoffeinierung eines wäßrigen Extrakts eines pflanzlichen Materials, wie beispielsweise Tee oder Kaffee, wobei man den Extrakt mit einem hydrophoben Styrol/Divinylbenzol-Harz oder Acrylester-Harz in Berührung bringt, wodurch Koffein und andere lösliche Bestandteile durch das Harz adsorbiert werden, und anschließend das Harz und den entkoffeinierten Extrakt wieder trennt. Dabei werden vorzugsweise die flüchtigen Geschmacksstoffe und Aromastoffe von dem Extrakt abgetrennt bevor er mit dem Harz kontaktiert wird, und diese flüchtigen Stoffe werden nach der Kontaktierung wieder mit dem Extrakt vereinigt. Nachteilig hierbei ist, daß gleichzeitig mit der Entfernung des Koffeins andere Bestandteile adsorbiert werden.

Die Entkoffeinierung von Tee wird heutzutage in großem Umfang durch Verwendung von organischen Lösemitteln, wie Methylenchlorid oder Ethylacetat, und insbesondere durch Verwendung von überkritischem Kohlendioxid als Lösemittel durchgeführt. Allen diesen Herstellungsverfahren ist gemeinsam, daß das Teeblatt zunächst mit Wasser oder Dampf befeuchtet werden muß. Anschließend wird das Koffein durch Behandlung des feuchten Teeblattes mit dem jeweiligen Lösemittel extrahiert und isoliert. Das entkoffeinierte feuchte Teeblatt wird durch Dämpfen vom Lösemittel befreit und muß anschließend getrocknet werden. Der so hergestellte Tee ist dann gebrauchsfertig und kann entweder als Beuteltee oder als Teeblatt für die Zubereitung eines entkoffeinierten Teeaufgusses eingesetzt werden.

Diese Verfahren können sowohl für die Herstellung von grünem als auch von schwarzem entkoffeinierten Tee verwendet werden.

Während bei der Entkoffeinierung von Kaffee meist die grünen Kaffeebohnen eingesetzt werden, die erst nach der Entkoffeinierung geröstet werden, wobei bei den hohen Rösttemperaturen die Lösemittelreste ausgetrieben werden, wird im Gegensatz zum Kaffee die Entkoffeinierung von Tee an dem gebrauchsfertigen grünen oder fermentierten Tee vorgenommen. Während beim Kaffee das Aroma erst beim Rösten des grünen Kaffees entwickelt wird, ist das Teearoma bereits vor dem Entkoffeinierungsprozeß vorhanden und kann bei den beschriebenen Extraktionsverfahren verlorengehen. Aus diesem Grunde muß der Tee auch nach der Extraktion zur Entfernung der organischen Lösemittelreste sehr schonend behandelt werden, obgleich die organischen Lösemittel vollständig entfernt werden müssen, da sie ein gesundheitliches Risiko darstellen, insbesondere das Methylenchlorid, dessen Verwendung für die Entkoffeinierung inzwischen vielfach verboten ist.

Solche Lösemittelprobleme treten nicht auf bei der Extraktion mit Kohlendioxid als Lösemittel, jedoch schädigt auch dieses Verfahren durch das zusätzliche Befeuchten und Trocknen die Qualität des Tees. Dennoch ist von allen bekannten Verfahren die Kohlendioxid-Extraktion das schonendste Verfahren, welches bisher die besten Produktqualitäten liefert. Allerdings wird auch bei diesem Verfahren ein nicht unerheblicher Teil der gesundheitsfördernden Teeinhaltsstoffe, beispielsweise der Antioxidantien, entfernt, wenn auch viel weniger als bei Extraktionsverfahren mit organischen Lösemitteln.

Ein Nachteil aller dieser Extraktionsverfahren ist ferner, daß sie nur in industriellen Einrichtungen durchgeführt werden können.

Eine umfangreiche Patentliteratur dokumentiert diesen Stand der Technik.

Die DE-PS 28 51 493 offenbart ein Verfahren zur Herstellung eines Teeextrakts mit vermindertem Kotfeingehalt, wobei ein Heißwasserextrakt von fermentiertem Tee durch Abkühlen in eine Fraktion Kaltwasser-löslicher Stoffe und eine Kaltwasser-unlösliche Fraktion aufgetrennt wird, wonach die Kaltwasser-unlösliche Fraktion mit einem Entkoffeinierungsmedium entkoffeiniert wird. Als Entkoffeinierungsmedia werden organische Lösemittel, wie chlorierte Kohlenwasserstoffe, vorgeschlagen.

Die DE-OS 34 13 869 lehrt die Verwendung von feuchtem, flüssigem Kohlendioxid für die Entkoffeinierung von schwarzem Tee, wobei das Koffein durch Adsorption an Aktivkohle oder einen Ionenaustauscher abgeschieden wird. Als weitere Adsorbentien werden Aktivkohle, Harze, Tonerden, Zeolithe offenbart.

Nach dem Verfahren der DE-OS 34 15 844 stellt man entkoffeinierten Tee durch Extraktion mit hinsichtlich Druck und Temperatur überkritischem Kohlendioxid in Gegenwart von Wasser her. Dem koffeinhaltigen Kohlendioxid wird das Koffein dann mit Aktivkohle wieder entzogen, so daß das koffeinfreie Kohlendioxid rezyklisiert werden kann. Dies ist das Basispatent für die heute durchgeführte Tee-Entkoffeinierung mittels Kohlendioxid.

Gemäß DE-OS 34 14 767 wird schwarzer oder grüner Tee entkoffeiniert unter Verwendung eines verdichteten oder verflüssigten Gases als Lösemittel für das Koffein, beispielsweise Kohlendioxid. Für die Extraktion wird unfermentierter Tee eingesetzt und die Fermentation, das Rollen und Trocknen der Teeblätter erfolgen nach der Extraktion.

Die DE-PS 35 15 740 betrifft ein weiteres Verfahren zur Entkoffeinierung von Tee mit Hilfe von wasserhaltigen, überkritischen Gasen wie Kohlendioxid, wobei das Koffein vom Kohlendioxid anschließend mit Hilfe eines Adsorbens abgetrennt wird. Als Adsorbens wird insbesondere Aktivkohle empfohlen, das Adsorbens kann mit Textilmaterial umhüllt in Form von Beuteln, Säcken oder Schläuchen innerhalb des Extraktionsgutes verteilt oder schichtweise in dieses eingebracht werden.

Auch die DE-OS 26 37 197 beschreibt ein Verfahren zum Entzug von Koffein mittels überkritischem Kohlendioxid, wobei das Koffein aus dem Extraktionsmittel durch selektive Bindung an Ionenaustauschern entfernt wird.

Die Problematik der Entkoffeinierung von Tee unter Hinweis auf den weiteren Stand der Technik wird in der DE-OS 21 27 642 besprochen, die ebenfalls überkritisches Kohlendioxid als Extraktionsmittel verwendet.

Wesentliche Nachteile aller dieser Verfahren liegen in dem zusätzlichen Befeuchtungsschritt, der eine nachfolgende Trocknung verlangt, in dem technischen Aufwand, der bei Einsatz überkritischer Gase erforderlich ist, bei den gesundheitlichen Bedenken, die bei Einsatz organischer Lösemittel bestehen und der mehr oder minder großen Schädigung der Teeinhaltsstoffe, wobei hierunter auch eine unerwünschte mechanische Zerkleinerung des Teeblattes und der Verlust wesentlicher Teeinhaltsstoffe zu verstehen sind.

Der Erfindung lag daher die Aufgabe zugrunde einen einfacheren Weg zur Bereitstellung eines entkoffeinierten Teegetränks zu schaffen, bei dem das Koffein selektiv entfernt wird, die erwünschten Inhaltsstoffe wie Aromen, Antioxidantien, Catechine im Teegetränk weitgehend erhalten bleiben und eine Kontaminierung des Getränks mit Resten von organischen Lösemittel sowie die mikrobiologische Exposition durch einen zusätzlichen Befeuchtungsschritt vermieden werden.

Diese Aufgaben werden erfindungsgemäß auf einfachste Weise gelöst, indem Tee in einem Teebeutel oder einem ähnlichen Behältnis in inniger Mischung mit einem Adsorbens für Koffein in bekannter Weise aufgebrüht wird. Dabei wird das Koffein aus dem Tee gelöst und umgehend an dem Adsorbens adsorbiert, so daß das fertige Getränk nach dem Entfernen des Teebeutels entkoffeiniert ist.

Obwohl in der Literatur Bedenken bezüglich der ausreichenden Selektivität von beispielsweise Aktivkohle für Koffein geäußert wurden (DE-OS 26 37 197) und obwohl bei der bisherigen Verwendung von Aktivkohle zur Adsorption von Koffein zumeist längere Kontaktierungszeiten verwendet werden, wurde überraschenderweise festgestellt, daß die kurzzeitige Kontaktierung des Teeaufgusses mit der Aktivkohle im Teebeutel ausreichend ist um eine hochgradige Entkoffeinierung ohne Entfernung anderer wertvoller Teeinhaltsstoffe zu erreichen.

Gegenstand der Erfindung ist somit ein Produkt zur unmittelbaren Herstellung eines trinkfertigen entkoffeinierten Teeaufgusses bestehend aus einer innigen Mischung von trockenen, gegebenenfalls zerkleinerten, fermentierten oder teil- oder unfermentierten Teeblättern mit einem festen, teilchenförmigen, wasserunlöslichen Adsorptionsmittel für Koffein, wobei sich die Mischung in einem flüssigkeitsdurchlässigen, heißwasserbeständigen Behältnis befindet, welches in der Lage ist, die festen Bestandteile der Mischung zurückzuhalten.

In der bevorzugten Ausführungsform ist das Behältnis ein Teebeutel. Der Teebeutel oder jedes andere geeignete Behältnis muß die Eigenschaft haben, durchlässig für die Teeinfusion zu sein, aber die festen Bestandteile des Produktes zurückzuhalten. Geeignete Keramik-, Metall-, Textil- und Papierbehältnisse, die diese Anforderungen erfüllen, sind bekannt.

Das Behältnis muß aber kein geschlossener Teebeutel sein, die feste Mischung kann auch in jedem anderen Behältnis aufgebrüht werden, beispielsweise einem Filtertrichter, aus dem die flüssige Infusion abfließen kann, wobei die festen Bestandteile der Mischung zurückgehalten werden.

Die hohe Wasserlöslichkeit des Koffeins und seine gute Adsorbierbarkeit gewährleisten, daß das Koffein während des 2-6 minütigen Aufbrühvorgangs an dem Adsorbens selektiv adsorbiert wird aber die anderen teespezifischen Bestandteile zum überwiegenden Teil im Aufguß enthalten bleiben.

Anders definiert betrifft die Erfindung also ein Verfahren zur Herstellung eines trinkfertigen entkoffeinierten Teeaufgusses, dadurch gekennzeichnet, daß eine feste Mischung aus trockenen, gegebenenfalls zerkleinerten, fermentierten oder unfermentierten Teeblättern mit einem festen, teilchenförmigen, wasserunlöslichen Adsorptionsmittel für Koffein mit heißem Wasser aufgegossen und 2-6 Minuten ziehengelassen wird, wonach die feste Mischung von dem so hergestellten Teeaufguß abgetrennt wird.

Als Adsorbentien können grundsätzlich alle festen Stoffe oder Mischungen davon verwendet werden, die Koffein adsorbieren und gleichzeitig gesundheitlich unbedenklich sind. Bevorzugt sind die Adsorbentien, die traditionell weitverbreitet in der Lebensmittelindustrie eingesetzt werden, beispielsweise Aktivkohle, Ionenaustauscher, Molekularsiebe, Zeolithe, Tonerden und Cyclodextrine. Das bevorzugte Adsorbens ist Aktivkohle.

Die Körnung des Adsorbens ist von wesentlicher Bedeutung. Die Teilchen sollen klein genug sein, um eine möglichst gleichmäßige Verteilung und innige Berührung mit den Teeblättern sicherzustellen, andererseits müssen sie groß genug sein um von dem Teebeutel oder einem andersartigen Behältnis zurückgehalten zu werden. Im allgemeinen ist eine Körnung von 0,1-1 mm möglich, ein bevorzugter Bereich liegt bei 0,20-0,25 mm.

Das Mischungsverhältnis zwischen Tee und Adsorptionsmittel wird so eingestellt, daß mit einer möglichst geringen Menge an Adsorptionsmittel der gewünschte Entkoffeinierungseffekt erreicht wird. Im allgemeinen liegt das Mischungsverhältnis zwischen Tee und Adsorptionsmittel, auf das Gewicht bezogen, zwischen 1:0,2 bis 1:3, vorzugsweise bei 1:0,6.

Insbesondere durch die Wahl des Kornverteilungsspektrums des Adsorbens kann der Entkoffeinierungsgrad gravierend beeinflußt werden. Über eine Veränderung der Körnung des Adsorbens kann eine Teilentkoffeinierung erreicht werden. Wenn nicht teilentkoffeinierte Tees hergestellt werden sollen, wird ein Entkoffeinierungsgrad von über 90% angestrebt, das heißt es sollen weniger als 10% des vorhandenen Koffeins in dem Teegetränk verbleiben.

Gefüllte Teebeutel, die gemäß vorliegender Erfindung hergestellt worden sind, werden zur Bereitung eines entkoffeinierten Teegetränks mit heißem Wasser (90°C oder heißer um jedem Tee anhaftende mikrobiologische Probleme sicher auszuschalten) in einem Aufgußgefäß genau wie normaler Tee aufgebrüht. Nach dem "Ziehenlassen" während 2-6, vorzugsweise 3-5 Minuten, also ohne zusätzliches Rühren oder Bewegen des Teebeutels, wird der Teebeutel aus dem Aufguß entfernt und das entkoffeinierte Teegetränk ist trinkfertig.

Zum Unterschied gegenüber dem Stand der Technik erfolgt erfindungsgemäß die Entkoffeinierung des Tees mit Wasser als Lösemittel.

Der organoleptische Vergleich eines erfindungsgemäß hergestellten entkoffeinierten Teegetränkes mit einem regulären, unbehandelten Teegetränk aus Tee gleicher Provenienz ergibt das überraschende Ergebnis, daß nahezu keine geschmacklichen oder farblichen Unterschiede zwischen den beiden Getränken festzustellen sind. Dieses Ergebnis ist deshalb überraschend, weil bei Getränken aus entkoffeinierten Tees, die mittels Verfahren nach dem Stand der Technik hergestellt worden sind, erhebliche negative Abweichungen zu einem Teegetränk das von regulärem, unbehandelten Tee gleicher Provenienz hergestellt ist, auftreten. Darüberhinaus bleiben erfindungsgemäß die im Tee enthaltenen bioaktiven Substanzen (Antioxidantien, antikarzenogene Substanzen u.a.) weitgehend erhalten, die selbst bei dem schonenden CO₂-Verfahren des Standes der Technik hydrolytisch gespalten und dadurch unwirksam werden. Diese Befunde werden bestätigt durch die Analysenergebnisse, die in Tabelle 1 wiedergegeben werden, in der wesentliche Komponenten der Teeinhaltsstoffe verglichen werden. Es ist ersichtlich, daß im Vergleich der wesentlichen Inhaltsstoffe, das Teegetränk, das nach dem erfindungsgemäßen Verfahren hergestellt wurde, dem regulären, unbehandelten Tee nahe kommt. In der nachstehenden Tabelle werden die Konzentrationen wesentlicher Komponenten, deren positiver Einfluß auf die Gesundheit aus einer Reihe von Publikationen bekannt ist, und wie sie sich nach den unterschiedlichen Entkoffeinierungsverfahren im Teegetränk ergeben, miteinander verglichen:

**Tabelle 1**

| *Vergleich verschiedener Teeinhaltsstoffe im Getränk in Abhängigkeit vom Entkoffeineierungsverfahren.* | | | | |
|---|---|---|---|---|
| | **Ausgangsprodukt** | **Erfindung** | **Etac entkoff. Tee** | **CO2 entkoff. Tee** |
| Koffein | 100 | <10 | <10 | <10 |
| Gallussäure | 100 | 78 | 36 | 75 |
| Theogallin | 100 | 72 | 65 | 71 |
| ECG | 100 | 76 | 35 | 75 |

| | | | | |
|---|---|---|---|---|
| ECG: Epicatechin-3-gallat | | | | |

Aus der Tabelle ist ersichtlich, daß die Inhaltsstoffe im Teegetränk, das nach dem erfindungsgemäßen Verfahren hergestellt wurde, in vergleichsweise höchster Konzentration vorhanden sind.

Die Untersuchungen an grünem Tee haben ergeben, daß durch das erfindungsgemäße Verfahren hohe Konzentrationen (min. 75 Prozent) des Epigallocatechin-3-gallates (EGCG) und des Epicatechin-3-gallates erhalten bleiben. Damit gelingt es mit diesem Verfahren erstmalig, die hohe Verfügbarkeit an den Substanzen, denen antikarzenogene Wirkung zugeschrieben wird, zu erhalten. Die hydrolysebedingte Zersetzung, die bei sämtlichen anderen Verfahren nach dem Stand der Technik auftritt, wird durch das erfindungsgemäße Verfahren unterbunden, da der zusätzliche Befeuchtungsschritt nicht benötigt wird. Vom organoleptischen Standpunkt ergibt sich noch der Vorteil, daß der adstringierende Geschmack, der dem Koffein zugeschrieben wird, nicht auftritt.

Die vorstehend geschilderten Verfahrensvorteile des erfindungsgemäßen Verfahrens machen es auch sinnvoll, qualitativ hochwertige Teesorten für entkoffeinierten Tee einzusetzen, da im Gegensatz zu den Verfahren nach dem Stand der Technik praktisch keine oder nur geringfügige Schädigung der qualitätsbestimmenden Merkmale des Tee bei seiner Zubereitung eintritt.

Die Erfindung wird durch die folgenden Beispiele näher erläutert.

### Beispiel 1

In einen Teebeutel wird ein Gemisch von 2,0 g schwarzem Tee der Sorte Ceylon Blends und 1,0 g Aktivkohle der Sorte Chemviron eingefüllt. Dabei wird darauf geachtet, daß die Korngrößenverteilung der Aktivkohle im Bereich von 0.21 bis 0.25 mm liegt. Zur Zubereitung des entkoffeinierten Teegetränkes (A) wird der Teebeutel in einer Tasse mit 150 ml heißem Wasser (>90°C) übergossen und fünf Minuten ziehengelassen. Als Vergleichsprobe (B) wird ein Teebeutel gleichen Teeinhaltes, jedoch ohne Aktivkohle, ebenfalls in einer Tasse mit 150 ml Wasser (>90°C) übergossen und ebenfalls fünf Minuten ziehengelassen.

Nach dem Entfernen der jeweiligen Teebeutel wurden die Getränke sowohl einem organoleptischen Vergleichstest als auch vergleichenden Analysen unterzogen. Bei dem organoleptischen Test wird festgestellt, daß der Geschmack der beiden Infusionen A und B weitgehend identisch ist, allerdings fehlte dem entkoffeinierten Tee (A) eine gewisse Bitternote, was auf den Entzug des Koffeins zurückzuführen ist. Wegen des Fehlens der Bitternote präferierte die überwiegende Anzahl der Probanden den entkoffeinierten Tee(A).

Bezüglich des Gehaltes an Inhaltsstoffen wurden folgende Analysendaten erhalten:
- Reguläres, nicht entkoffeiniertes Teegetränk (B): 0,0440 g Koffein/100 ml Getränk
- Entkoffeiniertes Teegetränk (A): 0,0035 g Koffein/100 ml Getränk
- Entkoffeinierungsgrad: 92 Prozent
- Restgehalt Gallussäure im Getränk (A): 78 Prozent
- Restgehalt Theogallin im Getränk (A): 76 Prozent
- Restgehalt Epicatechin-3-gallat im Getränk (A): 75 Prozent

### Beispiel 2

Eine Mischung von 1,5 g grünem Tee und 1,2 g Aktivkohle der Korngröße 0,25 - 0,5 mm werden in einen Teebeutel eingebracht und mit 150 ml 90°C heißem Wasser aufgebrüht und fünf Minuten einwirken gelassen. Anschließend wird der Kotfeingehalt im trinkfertigen Getränk ermittelt und der Entkoffeinierungsgrad errechnet.
- Kotfeingehalt des Ausgangstee: 3,4 Prozent
- Entkoffeiniertes Teegetränk: 0,004 g Koffein / 100 ml Getränk
- Entkoffeinierungsgrad: 89 Prozent
- Restgehalt Epigallocatechin-3-gallatim Getränk: 76 Prozent
- Restgehalt Epicatechin-3-gallat im Getränk: 75 Prozent

Der organoleptische Test zeigt, daß der strenge adstringrierende Geschmack des Teegetränkes, der sonst in unbehandelten grünem Tee auftritt, nicht vorhanden ist. Das ermöglicht den Genuß größerer Teemengen und damit auch die Aufnahme höherer Mengen an den gesundheitsfördernden Antioxidantien.

### Beispiel 3

Eine Mischung von 1,8 g Ceylon Tee und 2,0 g Ionenaustauscher wird in einen Teebeutel eingebracht, der dann mit 150 ml ca. 90°C heißem Wasser aufgegossen wird. Nach fünf Minuten Einwirkungszeit wird der Teebeutel aus dem Getränk entfernt und der Restkoffeingehalt ermittelt.
- Kotfeingehalt des Ausgangstee: 2,8 Prozent
- Entkoffeiniertes Teegetränk: 0,0087 g Koffein/100 ml Getränk
- Entkoffeinierungsgrad: 75 Prozent

### Beispiel 4

Es wird eine Mischung von 2,0 g Assam Tee mit einem Gemisch von 2,0 g Aktivkohle und Ionenaustauscher im Verhältnis 1:1 in einen Teebeutel eingebracht und mit 150 ml ca. 90°C heißem Wasser überbrüht. Nach fünf-minütigem Ziehenlassen wird der Teebeutel entfernt und das Teegetränk auf seinen Koffeingehalt untersucht. Es ergaben sich folgende Ergebnisse:
- Koffeingehalt des Ausgangstee: 2,9 Prozent
- Koffeingehalt des Teegetränkes: 0,0043 g Koffein/100 ml Getränk
- Entkoffeinierungsgrad: 78 Prozent

### Beispiel 5

Zur Bereitung einer größeren Portion Teegetränk werden 8 g Ceylon Tee mit 6 g Aktivkohle gemischt und in einem Teefilter in 600 ml ca. 90°C heißes Wasser eingebracht. Zum Vergleich werden ebenfalls 8 g Ceylon Tee derselben Provenienz ebenfalls mit 600 ml ca. 90°C heißem Wasser, jedoch ohne den Zusatz von Aktivkohle aufgebrüht. Aus beiden Getränken wird der Teefilter nach fünf Minuten entfernt. Die Blindverkostung beider Getränke ergab eine Präferenz für den entkoffeinierten Tee wegen der fehlenden Bitternote des Koffeins. Die Analyse ergab folgende Werte:
- Koffeingehalt des Ausgangstee: 3,2 Prozent
- Koffeingehalt des unbehandelten Getränkes: 0,0427 g Koffein/100 ml Getränk
- Koffeingehalt des entkoffeinierten Getränkes: 0,0043 g Koffein/100 ml Getränk
- Entkoffeinierungsgrad: 90 Prozent

### Beispiel 6

In einen Teebeutel wird eine Mischung von 1,8 g schwarzem Tee der Sorte Orange Pekoe und 0,9 g Aktivkohle mit einer Korngrößenverteilung zwischen 0,21 und 0,25 mm eingefüllt. Anschließend wird der Inhalt mit 150 ml ca. 90°C heißem Wasser aufgegossen und vier Minuten ziehengelassen. Nach dem Entfernen des Teebeutels wird eine Verkostung des Tee vorgenommen und die relevanten Analysendaten ermittelt. Die organoleptische Beurteilung fällt sehr gut aus. Es ist außer dem Fehlen der Bitternote keine Abweichung vom ursprünglichen Originalgetränk festzustellen.

Folgende Analysendaten wurden ermittelt:
- Reguläres, nicht entkoffeiniertes Teegetränk: 0,0380 g Koffein/100 ml Getränk
- Entkoffeiniertes Teegetränk: 0,0031 Koffein/100 ml Getränk
- Entkoffeinierungsgrad: 92 Prozent
- Restgehalt an Epigallocatechin -3-gallat: 75 Prozent
- Restgehalt an Epicatechin-3-gallat: 75 Prozent

## Patentansprüche

1. Produkt zur unmittelbaren Herstellung eines trinkfertigen entkoffeinierten Teeaufgusses bestehend aus einer innigen Mischung von trockenen, gegebenenfalls zerkleinerten, fermentierten oder teil- oder unfermentierten Teeblättern mit einem festen, teilchenförmigen, wasserunlöslichen Adsorptionsmittel für Koffein, wobei sich die Mischung in einem flüssigkeitsdurchlässigen, heißwasserbeständigen Behältnis befindet, welches in der Lage ist, die festen Bestandteile der Mischung zurückzuhalten.

2. Produkt nach Anspruch 1, dadurch gekennzeichnet, daß das Behältnis ein Teebeutel ist.

3. Produkt nach einem der vorhergehenden Ansprüche, dadurch gekennzeichnet, daß das Adsorptionsmittel Aktivkohle ist.

4. Produkt nach Anspruch 3, dadurch gekennzeichnet, daß die Aktivkohle eine Körnung von 0,1-1 mm, vorzugsweise 0,20-0,25 mm, aufweist.

5. Produkt nach einem der vorgehenden Ansprüche, dadurch gekennzeichnet, daß Tee und Adsoptionsmittel in einem Mischungsverhältnis von 1:0,2 bis 1:3, bezogen auf das Gewicht, vorliegen.

6. Verfahren zur Herstellung eines trinkfertigen entkoffeinierten Teeaufgusses, dadurch gekennzeichnet, daß eine feste Mischung aus trockenen, gegebenenfalls zerkleinerten, fermentierten oder teil- oder unfermentierten Teeblättern mit einem festen, teilchenförmigen, wasserunlöslichen Adsorptionsmittel für Koffein mit heißem Wasser aufgegossen und 2-6 Minuten ziehengelassen wird, wonach die feste Mischung von dem so hergestellten Teeaufguß abgetrennt wird.

7. Verfahren nach Anspruch 6, dadurch gekennzeichnet, daß das Adsorptionsmittel Aktivkohle mit einer Körnung von 0,1-1 mm, vorzugsweise 0,20-0,25 mm, ist und Tee und Adsorptionsmittel in einem Mischungsverhältnis von 1:0,2 bis 1:3, bezogen auf das Gewicht, vorliegen.

8. Verfahren nach Anspruch 6 oder 7, dadurch gekennzeichnet, daß die Mischung aus Tee und Adsorptionsmittel sich in einem Teebeutel befindet und die Abtrennung vom Teeaufguß dadurch erfolgt, daß der Teebeutel aus dem Aufguß entfernt wird.

9. Mischung aus trockenen, gegebenenfalls zerkleinerten, fermentierten oder teil- oder unfermentierten Teeblättern mit einem festen teilchenförmigen, wasserunlöslichen Adsorptionsmittel für Koffein zur Anwendung in einem Verfahren nach Anspruch 6 oder 7.
